# EUROPEAN PATENT SPECIFICATION

(11) **EP 2 319 766 B1**
(45) Date of publication and mention of the grant of the patent: **09.04.2014**
(21) Application number: 08805378.0
(22) Date of filing: 08.08.2008
(51) Int. Cl.: B65B 9/20, B65B 31/02

(54) **VERTICAL PACKAGING SYSTEM AND METHOD**
SYSTEM UND VERFAHREN ZUM VERTIKALEN VERPACKEN
SYSTÈME ET PROCÉDÉ D'EMBALLAGE VERTICAL

(43) Date of publication of application: 11.05.2011
(73) Proprietor: Ulma Packaging Technological Center, S.Coop., 20560 Guipuzcoa (ES)
(72) Inventor: ARRIETA AGUIRRE, Haritz, E-20560 Oñati (Gipuzkoa) (ES); DIAZ DE GEREÑU OLABARRI, Lander, E-20560 Oñati (Gipuzkoa) (ES)
(74) Representative: Igartua, Ismael
(86) International application number: PCT/ES2008/000556
(87) International publication number: WO 2010/018239

(56) References cited:
- EP-A2- 1 388 494
- EP-A2- 1 388 494
- EP-A2- 1 810 923
- EP-A2- 1 810 923
- EP-B1- 1 228 964
- EP-B1- 1 228 964
- WO-A1-03/026969
- WO-A1-03/026969
- DE-A1- 2 519 631
- US-A- 3 488 915
- US-A1- 2002 170 273
- US-A1- 2002 170 273
- US-A1- 2004 234 174
- US-A1- 2004 234 174

## Description

### Technical Field of the Invention

The invention is encompassed in the field of systems for the vertical packaging of products, for example, products comprising liquid.

### Background of the Invention

Machines and installations for the vertical formation of bags for the-for example, unitary or bulk - packaging of products are known today. Film is used to start in these systems which is longitudinally sealed to obtain a film tube, which is divided into individual containers by means of transverse seals. A cut can be made in the tube in correspondence with the transverse seal to separate one container from the next.

A system of this type is shown in WO-A-03/086869, which describes a machine in which a film is passed over the periphery of a forming tube. Conveyor belts drive the sheet of film downwards, while a sealing head forms a longitudinal seal, thus forming a film tube. On the other hand, a sealing and cutting head forms the transverse seal of the tube to constitute the base of the container and to in turn cut a previously formed lower container, such that it can be separated from the film tube. Then the upper container is filled through a central hole of the forming tube, and the upper opening of said upper container is subsequently closed by means of the sealing and cutting head.

Different types of film can be used in systems of this type, depending on the needs in each case, for example, depending on the type of product, depending on the characteristics of the filling process, etc.

The longitudinal and transverse seals are formed by means of applying pressure and heat (using, for example, in the case of the transverse seals, cutting jaws with heated wires), and the elements can be controlled with pneumatic systems, with cam and motor-based systems, with servomotors, etc.

Patent document DE 25 19 631 A1 discloses a vertical form fill seal device wherein the pouches are placed in a vacuum chamber to extract the air from the pouch, according to the preamble of claim 1.

Although these systems for packaging can be useful for packaging many products, for example, for packaging bulk products (packaging seeds, nuts and dried fruits, etc.), they can present problems for packaging liquid products or products comprising liquid, for example, food products which are conserved in a liquid such as oil, etc. A problem is due to the fact that the liquid or the product can splash the inner surfaces of the film tube, which makes it difficult or prevents the correct transverse seal through heat sealing by means of applying pressure and heat in a conventional manner (for example, by means of cutting jaws with heated wires), because in order for said sealing systems to work satisfactorily, the film surfaces that are to be joined together should be clean (i.e., free of liquid and/or product splashes), and not excessively long in order to be able to apply sufficient pressure. Otherwise, the risk of defects in the transverse seal increases.

For packaging many products, including products comprising liquids, horizontal feed techniques have conventionally been used (for example, packaging by thermoforming, heat sealing, flow-pack, etc.), which can be very fast (because unlike what occurs in vertical systems, the product displacement speed in systems for horizontal packaging does not depend on gravity), but they are very expensive and/or require a lot of room. So for many applications, horizontal systems are not a suitable or optimal solution.

### Description of the Invention

A first aspect of the invention relates to a machine or system for the vertical packaging of products, comprising:
a substantially vertical forming tube, also called feed tube, with a preferably cylindrical or elliptical section through which the product to be packaged -which can comprise solid and/or liquid elements - is displaced by gravity therein, and the film takes the shape of the container as it runs over the outer surface of the tube;
film-feeding means (for example, similar to those described in WO-A-03/086869) configured to apply a film on said forming tube, such that the film surrounds at least a part of said forming tube and such that the film is displaced along at least a part of said forming tube, towards an outlet end of said forming tube (for example, as occurs in WO-A-03/086869);
longitudinal film-sealing means configured to longitudinally seal the film by means of a longitudinal seal for forming a film tube enveloping at least a part of said forming tube (for example, consistent with what is described in WO-A-03/086869);
first transverse film-sealing means configured to form a transverse seal of the film tube in a position subsequent to the outlet end of said forming tube (according to the feeding direction of the film, i.e., in a position that is "below" or "lower" than that of the outlet end of the forming tube when the forming tube is located vertically for conventionally feeding the product by gravity), the transverse seals comprising an upper closure seal and a lower closure seal;
this transverse seal can be the base of a container and/or the upper closure of a previous container (i.e., of a container which received its sealed base in a previous transverse sealing phase, and which has now been filled with the corresponding product and must be closed in the next transverse sealing phase);
cutting means configured to make a transverse cut between the upper closure seal and the lower closure seal, to separate a portion of the film tube once the transverse seal is formed;
a vacuum chamber, configured to house therein the portion of the film tube, and to extract the air contained in the mentioned portion until producing a partial vacuum at a predetermined pressure inside the mentioned portion.

According to the invention, the first transverse film-sealing means are configured to form an upper closure seal with an opening, and the vacuum chamber comprises second sealing means configured to seal the opening once the air has been extracted from inside the portion of the film tube through said opening in the vacuum chamber.

The transverse film-sealing means can comprise ultrasonic sealing means having opposite sealing surfaces configured to come into contact with the film tube and form the transverse seal. These opposite surfaces for the transverse seal can be made up of an anvil and a sonotrode with two sealing faces, an upper face and a lower face separated by a transverse notch along the sonotrode to form the upper closure seal and the lower closure seal respectively. The anvil can be made up of an upper anvil configured to face the upper face of the sonotrode and a lower anvil configured to face the lower face of the sonotrode. The operation of the sealing means can be done by conventional means, preferably by a servomotor, which compresses the film against the anvils and the sonotrode. Additionally, as is typical in machines of this type, a blade is arranged between the upper anvil and the lower anvil which, upon preferably being operated by a conventional pneumatic actuator once the transverse seal has been finished by ultrasounds, presses the film against the notch of the sonotrode and makes a cut, separating the film tube with a transverse lower closure seal at its base from the container filled with product with a transverse upper closure seal, the base of which was sealed in the previous step.

In the preferred embodiment of the invention, the lower anvil can comprise a void configured such that the sealing surfaces do not contact one another along said void when forming the transverse seal, forming the mentioned opening in the upper closure seal. This void can be of the order of 25 mm, leaving a small opening of the same length in the upper closure seal of the portion of film tube once the seal is formed by ultrasounds. This opening enables the later extraction of the air from inside the container.

The second sealing means can comprise a jaw configured to form a seal circumscribing the opening of the upper closure seal and overlapping with the upper closure seal, hermetically closing the portion of film tube once the air has been extracted in the vacuum chamber.

The jaw can have an approximately semicircular configuration, with a diameter greater than the length of the opening.

In an alternative embodiment of the present invention, two continuous parallel welds are formed by ultrasound which define the base of the next container and the upper transverse closure of the recently formed container, thus preventing the formation of the void (for example by milling) in the lower anvil. In said alternative embodiment, punching means which are configured to form the mentioned opening in the upper closure seal can be used. It is also possible for the punching means to make a hole in the film before forming the upper closure seal, the mentioned hole preferably being formed in the area around the upper transverse closure, where the extraction of the air from inside the container is enabled.

It has been found that the use of sealing by ultrasonic welding allows overcoming, at least to a certain extent, the problems caused by liquid and/or product splashes inside surface of the film tube. Ultrasonic welding is also suitable for welding the film through drops and spots of liquid because the vibrations displace the liquid, moving it away from the sealing zone.

The invention thus allows the vertical packaging, by gravity, of liquid and/or oily products, sauces and mixed products (for example, of solid products immersed in liquid or accompanied by liquid, such as, for example, cheese in oil, tuna in oil, bonito tuna in oil, etc.) with maximum reliability despite the possible liquid and/or product splashes on the inner face of the film. The problems which the hot surfaces of conventional transverse sealing means (for example, heated by heated wires) can represent are further avoided because it is difficult to apply enough pressure in long sealing lengths of the order of 400 mm to break up or separate the liquid and/or the product deposited in the welding zone, and the corresponding problems of the risk of deterioration of the packaging are also avoided. By using ultrasonic welding, this system of the invention is furthermore not very demanding in terms of the cleaning conditions in the production environment.

On the other hand, according to one embodiment of the invention, the longitudinal film-sealing means and the transverse film-sealing means can be configured such that the longitudinal seal is at one end of the transverse seal. It is thus achieved that there are never more than two layers of film between the sonotrode and the anvil of the ultrasonic welding system because in said non-exclusive embodiment, an aluminized film is used, the characteristics of which, unlike other films such as, for example, BOPP, etc., make ultrasonic sealing of conventional containers with four central layers and two longitudinal layers difficult.

Traditionally, as observed in WO-A-03/086869, the longitudinal and transverse seals are formed such that the longitudinal seal will be in the central part of the transverse seal. Thus, in the zone where both seals coincided, up to four layers of film (on one hand, the two layers to be joined together, and on the other, the two layers that were part of the longitudinal seal) overlap one another. In the conventional processes based on using jaws with heated wires, or in the process of the present invention based on using ultrasonic welding on films, such as for example BOPP, etc., welding overlapping layers is not a problem. However, in the case of ultrasonic welding on aluminized films, if a transverse seal of the tube is to be formed, using the same tool on two overlapping layers of film as on one zone in which there are four overlapping layers (the zone of four overlapping layers corresponds to the central zone where the longitudinal weld is located), makes it very difficult to obtain homogenous transverse seals and increases the risk of errors and defects in the sealing. In order to assure proper sealing also in the zone where four layers are overlapping, it would be necessary to increase the power of the ultrasonic system, with the drawbacks that this implies. Furthermore, if the seal is to be formed on a non-homogenous object (i.e., with a thickness ranging from two layers to four layers of film), is more difficult to obtain a homogenous result.

The longitudinal film-sealing means of the present invention can be configured to form the longitudinal seal such that two zones of one and the same face or surface of the film are joined together. For example, upon forming the tube, the "inner" surfaces of two longitudinal edges or ends of the film can be joined together such that a longitudinal weld is established in which the free longitudinal edges or ends of the film are juxtaposed, directed "outwardly" of the tube. A very homogenous surface is thus achieved on which the transverse seal is later formed. In other words, the longitudinal film-sealing means can be configured such that said two zones of the same surface of the film are joined together close to respective longitudinal edges of the film in order to create a longitudinal weld in correspondence with said longitudinal edges without any zone having more than two overlapping layers of film.

The system can additionally comprise stretching means configured to transversely stretch the film tube in two opposite directions such that the film tube is substantially flat in a direction parallel to the surfaces for the transverse seal. These stretching means can be fixed or pneumatically activated.

In the preferred embodiment of the invention, said stretching means can comprise a clamp and an expander (pneumatically operated, for example) which are configured to act synchronously and stretch the film tube in correspondence with the sealing direction in substantially horizontal opposite directions, such that the film tube is substantially flat and crease-free in a direction parallel to the surfaces for the transverse seal. The stretching means can be arranged under the forming tube in diametrically opposed positions facing one another.

The clamp can comprise at least one grip configured to seize the film along the longitudinal seal and stretch it in the horizontal direction. The expander (for example, joined to the inside of the forming tube by means of a rotating shaft) can be made up of a stretching rod protruding from under the forming tube at the end of which a hold-down plate is arranged, configured to contact the inner surface of the film at approximately the height of the clamp, and a pull rod acting as a lever configured to move the stretching rod in the opposite direction as the clamp when it is vertically operated by an actuator arranged above the forming tube. Using this type of stretching means can avoid creases and can establish a substantially flat surface for the transverse seal, which serves to reduce the risk of defects in the weld.

In an alternative embodiment of the present invention, the stretching means can be made up of two arms facing one another and configured to stretch the tube in opposite directions, comprising at least two pairs of clamps in each arm. One clamp is located higher than the sealing surfaces and one clamp lower than said sealing surfaces when the forming tube is vertically arranged, i.e., in the typical operating position of systems of this type.

On the other hand, the system can comprise compacting and positioning means of the portion of film tube, and they can comprise two opposite plates (arranged inside the vacuum chamber in a position lower than the surfaces for the transverse seal) configured to exert pressure on the film tube and compact the product poured into the portion of the film tube. Said compactor has preferably pneumatic actuators enabling the relative movement between the two facing plates to compact the product before sealing, and once the transverse seal is formed and the portion of the film tube cut, it enables its holding and downward vertical displacement towards the inside of the vacuum chamber, positioning the portion of film tube inside the vacuum chamber such that the opening of the upper closure seal (through where the air is extracted) is opposite the second sealing means.

The vacuum chamber has a cylinder which hermetically closes said chamber once the portion of film tube is positioned therein, and it also comprises a suction pump to extract the air from inside the chamber, equaling the pressure inside the portion of film tube to that of the inside of the vacuum chamber, until reaching a pre-established pressure, said pre-established pressure being lower than atmospheric pressure. The conservation of the product is thus favored, while at the same time any crease in the sealing zone is avoided due to the difference of pressure inside and outside the portion of film tube.

The second sealing means located inside the vacuum chamber have a cylinder which, in a preferred embodiment, compress a jaw against the film and against an anvil at the indicated pressure in order to seal the opening of the upper closure seal once the air has been extracted from inside the portion of film tube. In a preferred embodiment of the present invention, said second sealing means are made up of conventional heated wires which heat and weld the different layers of film, and it is characterized by having a jaw with a semicircular shape, with a radius of the order of 50 mm to exert greater pressure during the sealing process, and if needed, to break up or separate the product which may be in the sealing zone. Said radius assures that the opening of the upper closure seal (through which the air is extracted from the portion of film tube) is hermetically closed because the weld of the second sealing means circumscribes the opening and overlaps with the upper closure seal of the ultrasonic welding.

The system can be configured to feed the film and to form the transverse seal synchronously while feeding products through the forming tube such that each product to be packaged is housed in a bag defined by the film tube with a base defined by a transverse seal of the film tube. The system can further be configured to feed the film after having received a product to be packaged on said sealed base and before forming a new transverse seal of the film tube, such that said transverse seal is formed above the product, determining the lower closure seal of a new base on which the next product to be packaged can be deposited.

Another aspect of the invention relates to a method for the vertical packaging of products comprising the steps of:
applying a film on a forming tube and forming a film tube from said film by means of a longitudinal seal;
sequentially feeding product through the forming tube and forming a transverse seal (for example by ultrasounds) comprising a lower closure seal for forming the base of the film tube, and an upper closure seal in the portion of film tube with product therein;
making a transverse cut between the upper closure seal and the lower closure seal, to separate said portion of the film tube with a product therein.

According to the invention, the method for packaging comprises the additional phases of:
forming an opening in the upper closure seal;
extracting the air contained in the portion of the film tube through the opening;
forming a second seal to seal the mentioned opening.

According to a preferred embodiment of the invention, the longitudinal seal of the film can be formed such that the longitudinal seal is at one end of the transverse seal

The method can, for example, comprise the following steps which are performed after the product enters a portion of the film tube through the forming tube and before a transverse upper closure seal is formed to partially close said portion of the film tube above the product:
- compacting the product to make it difficult for air to enter the part of the portion of film tube containing the product and reorganizing/reconfiguring the product. This compacting is performed with compacting and positioning means;
- stretching the film with stretching means to provide a substantially flat and crease-free zone where the transverse seal is formed. The stretching is performed in correspondence with sealing surfaces before forming the transverse seal with said sealing surfaces. The step of stretching the film tube can be performed by stretching the film tube with at least one clamp and an expander which are configured to act synchronously in opposite and substantially horizontal directions such that the film tube is substantially flat and crease-free in a direction parallel to the surfaces for the transverse seal;

Once the upper closure seal has been formed with an opening to extract the air from therein and said portion of the film tube has been cut to separate it from the film tube, the method can comprise for example, the following steps:
- introducing and positioning, by compacting and positioning means, the portion of the film tube inside the vacuum chamber such that the opening of the upper closure seal is opposite second sealing means configured to form the second seal inside the vacuum chamber;
- extracting air until the predefined pressure in the vacuum chamber and sealing the opening of the upper closure seal through the second sealing means, leaving the container hermetically closed;
- opening the vacuum chamber, releasing the portion of film tube by means of opening the compacting means and returning to the initial position.

The second seal to seal the opening of the upper closure seal can be formed by means of second sealing means comprising a jaw having an approximately semicircular configuration with a diameter greater than the length of the opening, circumscribing the opening and overlapping with the upper closure weld, hermetically closing the portion of the film tube.

According to the method of the invention, the longitudinal seal of the film and the transverse seal of the film can be formed such that the longitudinal seal is at one end of the transverse seal, such that there is no zone in the transverse seal having more than two overlapping layers of film.

The film can be fed and the transverse seal can be formed synchronously while feeding products through the forming tube such that each product to be packaged is housed in a portion of the film tube with a base defined by the lower closure seal.

The film can be fed after having received a product to be packaged on said lower closure seal before the upper closure seal.

What has been described with respect to the system is also applicable to the method, *mutatis mutandis.*

### Description of the Drawings

To complement the description and for the purpose of aiding to better understand the features of the invention according to a preferred practical embodiment thereof, a set of drawings is attached as an integral part of the description in which the following has been depicted with an illustrative and nonlimiting character:
Figures 1-8 show elevational schematic views of the system according to a preferred embodiment of the invention in eight successive operating phases.
Figures 9-11 show three schematic views of the film tube throughout the process; film tube with the longitudinal seal (Figure 9); container longitudinally and transversely sealed with an opening in the upper closure seal (Figure 10); and container hermetically closed with longitudinal seal, transverse seal and with a seal on the opening (Figure 11).
Figure 12 shows the forming tube, the stretching means and the transverse sealing means according to the preferred embodiment.
Figures 13-14 show two perspective views of the vacuum chamber in which the second sealing means and part of the compacting and positioning means can be seen.
Figures 15-17 show two side elevational views (Figures 15 and 16) of the machine or system of the invention (one of the views shows the system rotated 90º about a vertical axis with respect to the other view) and a third perspective view of the machine (Figure 17).

### Preferred Embodiment of the Invention

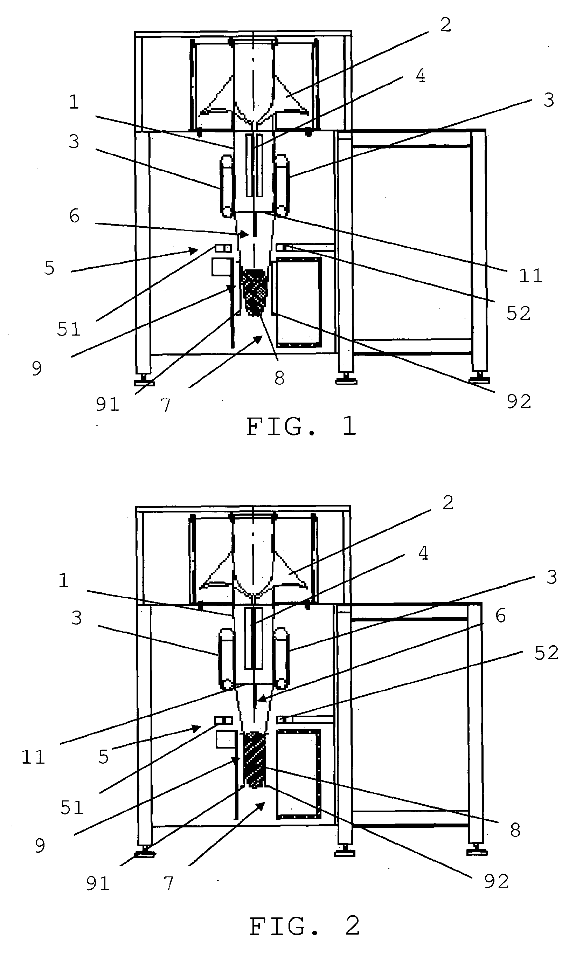

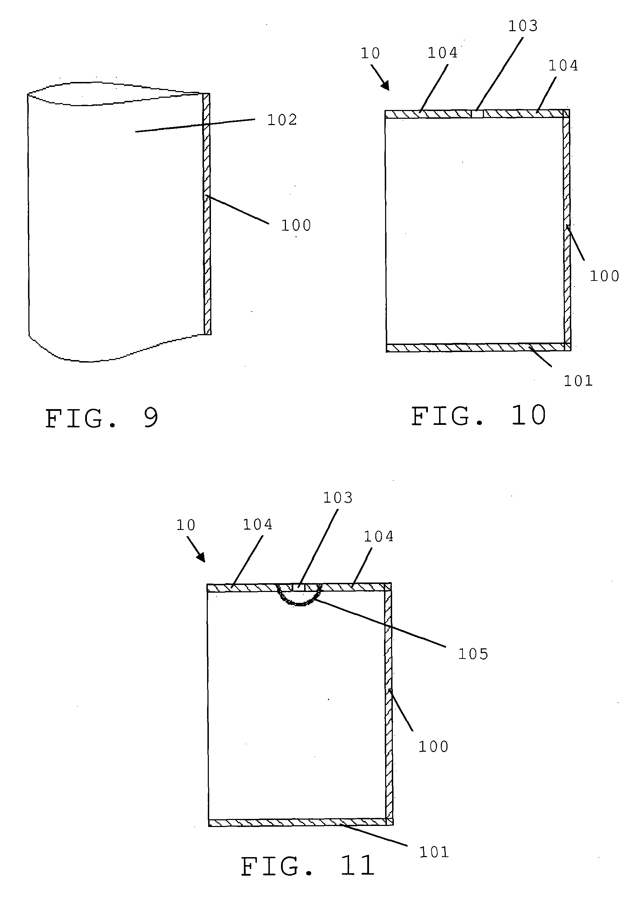

Figures 1-8 show several moments of the operation of a system according to a preferred embodiment of the invention. As can be observed in Figure 1, the system comprises forming elements (2) where the film, which can come from film-feeding means (not depicted), such as for example a reel of film, passes to be applied on the forming tube (1), and then it is later driven downwards, i.e., towards the outlet end (11) of the forming tube, by means of a drive system (3) with its corresponding drive belts, for example in the same manner as in WO-A-03/086869. Furthermore, like in WO-A-03/086869, there are longitudinal film-sealing means (4) which can be of any type (for example, based on conventional heated wires) and which are configured to longitudinally seal the film by means of a longitudinal seal (100) (see Figure 9), whereby forming a film tube (102) enveloping at least part of the forming tube (1).

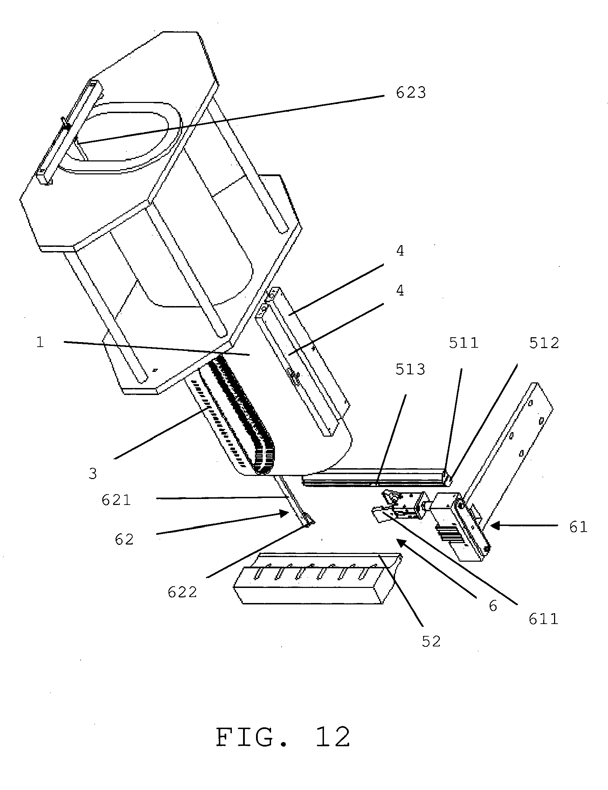

On the other hand, the transverse film-sealing means (5) are configured to form successive transverse seals (101, 104) of the film tube (102) (see Figures 10 and 11) in a position subsequent to the outlet end (11) of the forming tube (1), i.e., under the outlet end (11). These transverse sealing means (5) comprise ultrasonic sealing means having opposite sealing surfaces (51, 52) made up of an anvil (51) and a sonotrode (52). The sonotrode (52) in turn has two sealing faces, an upper face and a lower face separated by a transverse notch along the sonotrode (52), which form two parallel weld lines upon compressing the film against the anvil (51). The anvil (51) is in turn made up of an upper anvil (511) facing the upper face of the sonotrode and a lower anvil (512) facing the lower face of the sonotrode as can be seen in Figure 12.

The lower anvil (512) of the present invention is characterized in that it has a void (513) of the order of 25 mm in length formed, for example, by means of milling which, upon forming the transverse weld (104) of the portion of film tube (10), forms a small opening (103) in the upper closure seal (104) due to the fact that the lower face of the sonotrode does not come into contact with the lower anvil (512) along said void (513). This opening (103) enables the subsequent extraction of the air from inside the container.

A blade (not depicted) which cuts the film longitudinally between the two welds (101, 104), separating the film tube (102) with a longitudinal seal (100) and a lower closure seal (101) at its base, a portion (10) of film tube (102) containing the product (8) by means of a longitudinal seal (100), a transverse upper closure seal (104) which has an opening (103), and a transverse lower closure seal (101) at its base formed in a previous process, is arranged between the lower anvil (512) and the upper anvil (511), as is conventional.

The transverse film-sealing means (5) can conventionally be activated from an electric signal generator with the suitable frequency (for example, of the order of 15-40 kHz), a converter which converts the electric signal into a mechanical signal and a booster. These equipment are conventional and the person skilled in the art can easily choose which best adapts to a specific application depending on, for example, the characteristics of the materials to be welded and other aspects such as, for example, the cost of the equipment.

As can be observed in Figure 12, the longitudinal film-sealing means (4) and the transverse film-sealing means (5) are configured such that the longitudinal seal (100) is at one end of the transverse seal (101, 104). In the embodiment illustrated (see Figures 9-11), the longitudinal seal is formed such that two zones of one and the same surface of the film are joined together and such that these two zones are joined together close to respective longitudinal edges of the film. A longitudinal weld (100) is thus created in correspondence with the longitudinal edges, and there is no zone in the transverse seals (101, 104) having more than two overlapping layers of film, thus achieving a reliable transverse closure by means of ultrasonic welding both in aluminized films and in conventional films.

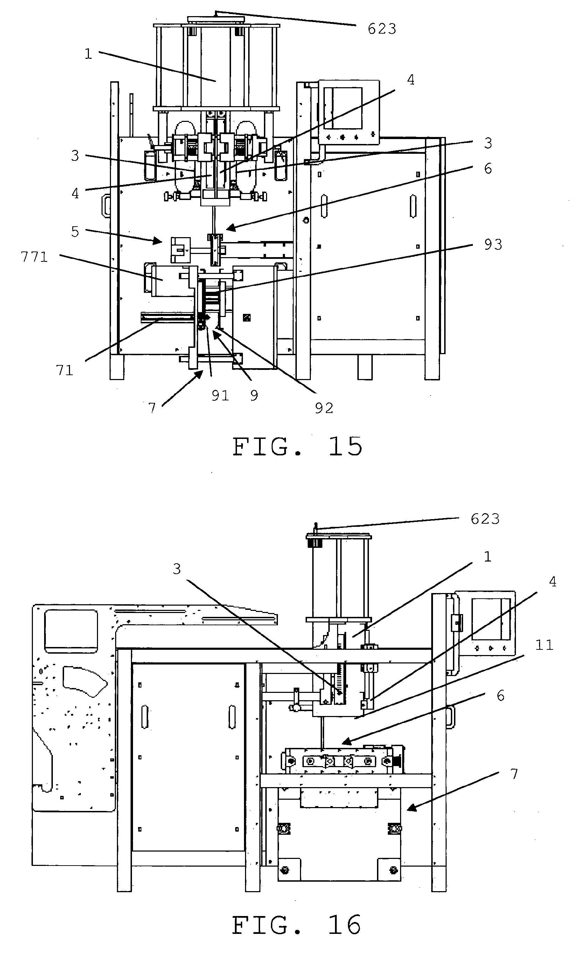

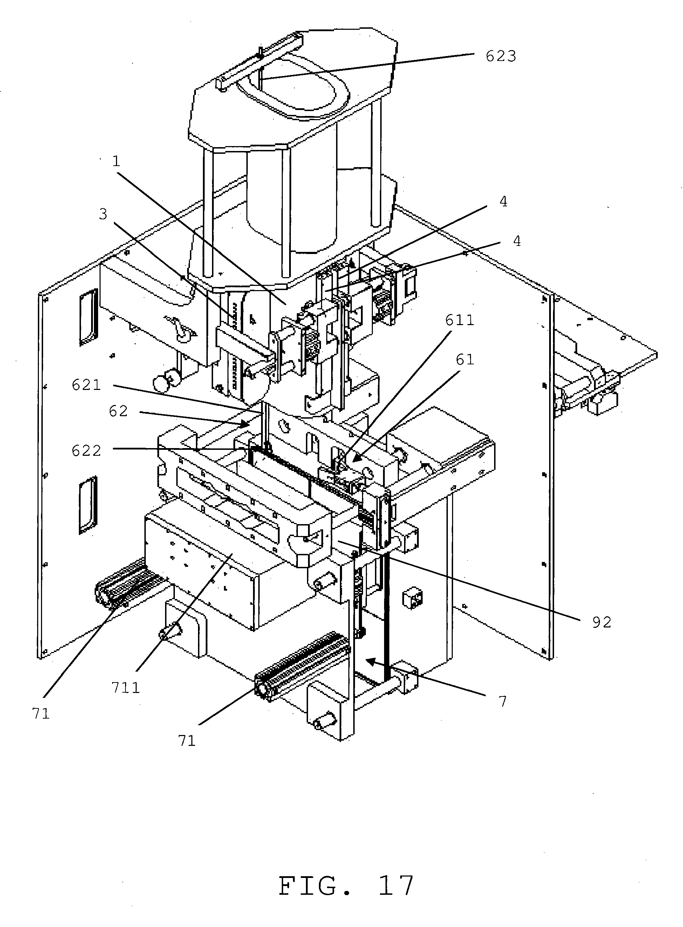

To facilitate the transverse seal and avoid creases etc. in the sealing zone of the film, which could damage the seal quality, stretching means (6), which are illustrated in greater detail in Figure 12 (see also Figures 15-17), have been provided and they comprise a clamp (61) and an expander (62) acting synchronously and configured to stretch the film tube (102) in correspondence with the sealing surfaces (51, 52) of the transverse sealing means (5) in substantially horizontal opposite directions such that the film tube (102) is substantially flat and crease-free in a direction parallel to the surfaces (51, 52) for the transverse seal. The clamp (61) has at least one grip (611) which seizes the film along the overlap of the longitudinal seal (100) and stretches it in the horizontal direction. The expander (62) is in turn joined to the inside of the forming tube (1) by means of a rotating shaft, not depicted, and comprises a stretching rod (621) protruding from under the forming tube (1), a hold-down plate (622) at its end which enters into contact with the inner surface of the film approximately at the height of the clamp (61), and a pull rod (623) acting as a lever and moving the stretching rod (621) and the hold-down plate (622) in the opposite direction as the clamp (61) when it is vertically operated by a pneumatic actuator (not depicted) arranged above the forming tube (1).

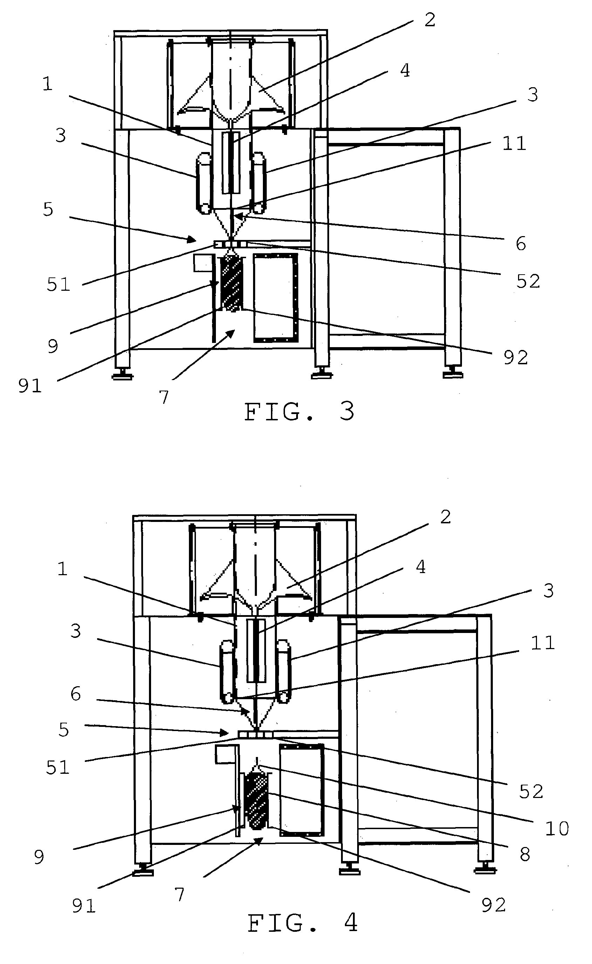

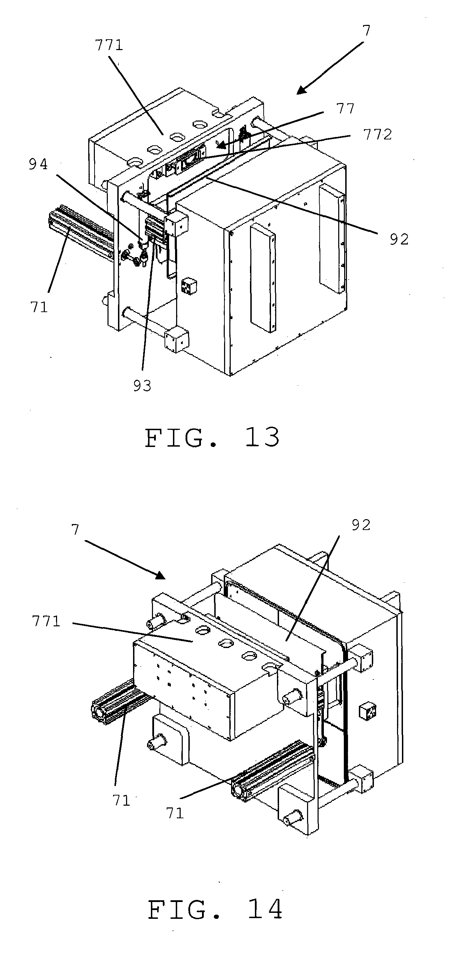

On the other hand, according to this preferred embodiment of the invention, the system for packaging additionally comprises compacting and positioning means (9) which, as shown in Figures 1-8, comprise a compactor in a position lower than the surfaces (51, 52) for the transverse seal formed by two opposite plates (91, 92) configured to exert pressure on the film tube (102) and compact the product (8) once poured. As shown in Figures 13 and 14, said positioning means (9) are arranged inside the vacuum chamber (7) and comprise pneumatic actuators (93) to compact the product and pneumatic actuators (94) to vertically displace the container (Figure 4) in the downward direction and introduce it inside a vacuum chamber (7), positioning said container (10) inside the vacuum chamber (7) such that the opening (103) is located exactly in the weld site of the second sealing means (77).

The vacuum chamber (7) comprises pneumatic actuators (71) which hermetically close said chamber and a suction pump (not depicted) which extracts the air from therein until reaching a predetermined pressure. Accordingly, the air from inside the container (10) is also extracted through the opening (103), an at least partial vacuum being formed which can serve to improve conservation of the product and avoid the occurrence of creases in the surface of the container, which facilitates the work of the second sealing means (77) because the pressures inside the container (10) and inside the vacuum chamber (7) are equal at all times.

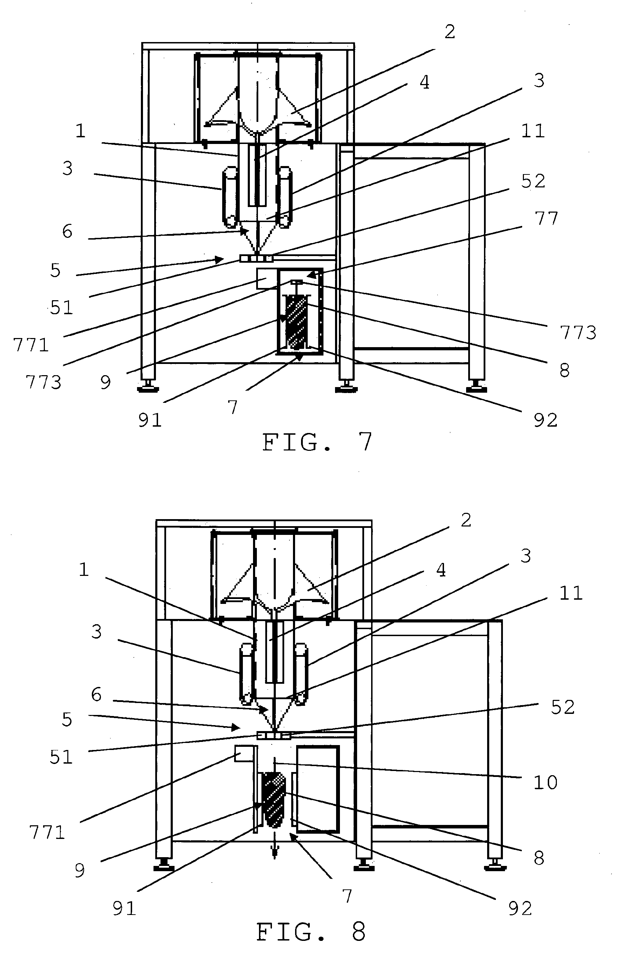

The second sealing means (77) are then activated (as shown in Figure 7) by pneumatic actuators (771) which push the heat-welding jaw (772) against the film and against the anvil (773) to seal the opening (103) of the container. Said jaw (772) has a semicircular shape with a diameter greater than the length of the opening (103), of the order of 50 mm, and it is applied such that it circumscribes said opening (103) and overlaps with the transverse weld (104), hermetically closing the container (10) by means of a weld (105).

In this embodiment of the invention, the system is configured to feed the film and to form the transverse seal synchronously while feeding products through the forming tube (1), such that each product -or part of the product- to be packaged is housed in a bag defined by the film tube with a base defined by a transverse seal of the film tube. After a product (8) to be packaged has been received on the lower closure seal (101), the film is fed and a new transverse seal (101, 104) is formed above the product, determining a new lower closure seal (101) at the base on which the next product to be packaged can be deposited and an upper closure seal (104) with an opening (103) in the portion of film tube (10) with product (8) therein.

The system can work according to the following method or sequential steps:

The film is conventionally fed and applied on the tube, a longitudinal seal or weld (100) being formed, establishing a film tube (102).

Sequentially, the product (8) is fed through the forming tube (1) and a transverse seal is formed comprising the lower closure seal (101) and the upper closure seal (104) with an opening (103).

Then a transverse cut is made between the upper closure seal (104) and the lower closure seal (101) to separate a portion (10) of the film tube (102) with the product (8) therein. The transverse seals (101, 104) are formed with ultrasonic transverse sealing means (5) such that each portion (10) of film tube (102) is partially closed by the longitudinal seal (100) and by two transverse seals (101, 104) containing a small opening (103) through which the extraction of the air from inside the container (10) is enabled, as seen in Figures 9, 10 and 11.

Once the base (101) of the film tube (102) is formed, the product (8) is introduced through the forming tube (1), as can be observed in Figure 1. Throughout this step, the transverse sealing means (5) and the stretching means (6) are in their retracted position, as are the compacting and positioning means (9), the second sealing means (77) and the vacuum chamber (7), which is open.

Next, the two opposite plates (91, 92) of the compacting and positioning means (9) approach one another compact and/or reorganize/reconfigure the product (8). Subsequently, the film tube (102) is also stretched through the stretching means (6), pressing the film tube (102) in opposite directions to eliminating the creases which may make the transverse sealing difficult and establishing a substantially flat surface which reduces the risk of defects in the weld. These phases of the process are seen in Figure 2.

As shown in Figure 3, the surfaces of the anvil (51) and of the sonotrode (52) then approach one another and come into contact with the film tube (102) to form the transverse seal (101, 104) in the corresponding zone, leaving an opening (103) in the upper closure seal (104) of the portion (10) of the film tube (102) and forming the base (101) of the film tube (102) which will be filled with product (8) in a later process. The container (10) is then conventionally separated from the rest of the film tube (102) by cutting.

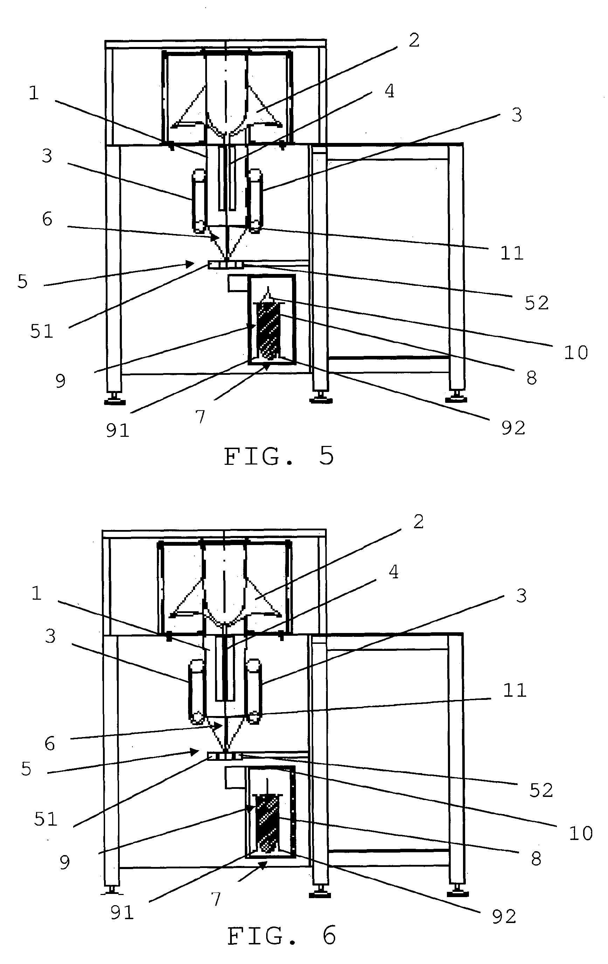

The compacting and positioning means (9) then introduce the container (10) inside the vacuum chamber (7) such that the opening (103) is located exactly in the weld site of the second sealing means (77) (Figure 4). Then the vacuum chamber (7) (see Figure 5) is hermetically closed and the air is extracted from inside the chamber (7) and from the container (10) (see Figure 6).

Once the desired pressure is obtained inside the vacuum chamber (7) and, hence, in the container (10), the second sealing means (77) form a second weld (105) which closes the opening (103) and leaves the container (10) hermetically closed, as shown in Figure 7.

Finally, as shown in Figure 8, the second sealing means (77) return to their starting position, the vacuum chamber (7) opens, the compacting and positioning means (9) release the container, letting it fall by gravity towards the outside of the system for vertical packaging, and all the systems return to their initial position to repeat the packaging sequence.

In this text, the word "comprises" and variants thereof (such as "comprising", etc.) must not be interpreted in an excluding manner, i.e., they do not exclude the possibility that what is described may include other elements, steps, etc.

On the other hand, the invention is not limited to the specific embodiments that have been described, but it also encompasses, for example, the variants which can be carried out by a person skilled in the art (for example, in terms of the choice of materials, dimensions, components, configuration, etc.), within what is inferred from the claims.

## Claims

1. System for the vertical packaging of products, comprising:
a forming tube (1);
film-feeding means (2, 3) configured to apply a film on said forming tube (1), such that the film surrounds at least a part of said forming tube and such that the film is displaced along at least a part of said forming tube, towards an outlet end (11) of said forming tube;
longitudinal film-sealing means (4) configured to longitudinally seal the film by means of a longitudinal seal (100) and to form a film tube (102) enveloping at least a part of said forming tube (1);
first transverse film-sealing means (5) configured to form a transverse seal of the film tube (102) in a position subsequent to the outlet end (11) of the forming tube (1), the transverse seals comprising an upper closure seal (104) and a lower closure seal (101);
cutting means configured to make a transverse cut between the upper closure seal (104) and the lower closure seal (101) to separate a portion (10) of the film tube (102) once the transverse seal is formed;
a vacuum chamber (7) configured to house therein the portion (10) of film tube (102) and to extract the air contained in the mentioned portion (10) until producing a partial vacuum at a predetermined pressure inside the mentioned portion (10);
**characterized in that**
the first transverse film-sealing means (5) are configured to form an upper closure seal (104) with an opening (103), and **in that** the vacuum chamber (7) comprises second sealing means (77) configured to seal the opening (103) once the air has been extracted from inside the portion (10) through said opening (103) in the vacuum chamber (7).

2. System according to claim 1, wherein the first transverse film-sealing means (5) comprise ultrasonic sealing means having opposite sealing surfaces (51, 52) configured to come into contact with the film tube (102) and form the mentioned transverse seal, the sealing surfaces (51, 52) being made up of a anvil (51) and a sonotrode (52), the sonotrode comprising an upper face and a lower face separated by a transverse notch to form the upper closure seal (104) and the lower closure seal (101) respectively, the anvil (51) being made up of an upper anvil (511) configured to face the upper face of the sonotrode, and a lower anvil (512) configured to face the lower face of the sonotrode.

3. System according to claim 2, wherein the lower anvil (512) comprises a void (513) configured such that the sealing surfaces (51, 52) do not contact one another along said void (513) when forming the transverse seal, the mentioned opening (103) being formed in the upper closure seal (104).

4. System according to claim 2, wherein the first transverse film-sealing means (5) comprise punching means configured to form the mentioned opening (103) in the upper closure seal (104).

5. System according to claim 1, **characterized in that** the second sealing means (77) comprise a jaw (772) configured to form a seal (105) circumscribing said opening (103) and overlapping with the upper closure seal (104), hermetically closing the portion (10) once the air has been extracted in the vacuum chamber (7).

6. System according to claim 5, **characterized in that** the jaw (772) has an approximately semicircular configuration, with a diameter greater than the length of the opening (103),

7. System according to claim 1, **characterized in that** it additionally comprises compacting and positioning means (9) comprising two opposite plates (91, 92) arranged inside the vacuum chamber (7), the mentioned opposite plates (91, 92) being configured to exert pressure and compact a product (8) poured into the portion (10) of the film tube (102), and to introduce and position the mentioned portion (10) inside the vacuum chamber (7), such that the opening (103) of the upper closure seal (104) is opposite the second sealing means (77).

8. System according to claim 1, **characterized in that** it additionally comprises stretching means comprising a clamp (61) and an expander (62) which are configured to act synchronously and stretch the film tube (102) in correspondence with the sealing surfaces (51, 52) in substantially horizontal opposite directions, such that the film tube (102) is substantially flat and crease-free in a direction parallel to the surfaces (51, 52) for the transverse seal.

9. System according to claim 8, **characterized in that** the clamp (61) comprises at least one grip (611) configured to seize the film along the longitudinal seal (100), and **in that** the expander (62) comprises a stretching rod (621) protruding from under the forming tube (1), **in that** the mentioned expander comprises at one of its ends a hold-down plate (622) configured to contact the inner surface of the film at the height of the clamp (61), and **in that** the expander (62) comprises a pull rod (623) configured to move the stretching rod (621) and the hold-down plate (622) in the opposite direction as the clamp (61).

10. System according to any of the preceding claims, **characterized in that** the longitudinal film-sealing means (4) and the first transverse film-sealing means (5) are configured such that the longitudinal seal (100) is at one end of the transverse seal (101, 104) such that there is no zone in the transverse seal (101, 104) having more than two overlapping layers of film.

11. Method for the vertical packaging of products, which comprises:
applying a film on a forming tube (1) and forming a film tube (102) from said film by means of a longitudinal seal (100);
sequentially feeding product (8) through the forming tube (1) and forming a transverse seal comprising a lower closure seal (101) and an upper closure seal (104);
making a transverse cut between the upper closure seal (104) and the lower closure seal (101) to separate a portion (10) of the film tube (102) with the product (8) therein;
**characterized in that** it comprises the additional phases of:
forming an opening (103) in the upper closure seal (104);
extracting the air contained in the portion (10) of the film tube (102) through the opening (103);
forming a second seal (105) to seal the mentioned opening (103)

12. Method according to claim 11, **characterized in that** it additionally comprises the step of stretching the film tube (102) in correspondence with sealing surfaces (51, 52) before forming the transverse seal with said sealing surfaces (51, 52).

13. Method according to claim 12, **characterized in that** the step of stretching the film tube is performed by stretching the film tube with at least one clamp (61) and an expander (62) which are configured to act synchronously in opposite and substantially horizontal directions such that the film tube (102) is substantially flat and crease-free in a direction parallel to the surfaces (51, 52) for the transverse seal.

14. Method according to claim 12, **characterized in that** it additionally comprises the step of compacting the product with compacting and positioning means (9) before forming the transverse seal with said sealing surfaces (51, 52), and the step of introducing and positioning the portion(10) of the film tube (102) inside a vacuum chamber (7) once the transverse seal is formed and the cut separating the portion (10) of the film tube (102) is made, such that the opening (103) is opposite second sealing means (77) configured to form the second seal (105) inside the vacuum chamber (7).

15. Method according to claim 14, **characterized in that** the second sealing means (77) form a second seal (105) by means of a jaw (772) having an approximately semicircular configuration with a diameter greater than the length of the opening (103), circumscribing the opening (103) and overlapping with the upper closure weld (104), hermetically closing the portion (10) of the film tube (102).

16. Method according to claims 11-15, **characterized in that** the longitudinal seal of the film and the transverse seal of the film are formed such that the longitudinal seal is at one end of the transverse seal such that there is no zone in the transverse seal having more than two overlapping layers of film.

17. Method according to any of claims 11-16, **characterized in that** the film feeding and transverse seal formation are performed synchronously with the feeding of products (8) through the forming tube (1) such that each product to be packaged is housed in a portion (10) of the film tube (102) with a base defined by the lower closure seal (101).

18. Method according to claim 17, **characterized in that** the film is fed after having received a product (8) to be packaged on said lower closure seal (101), before the upper closure seal (104).

## Patentansprüche

1. System zum vertikalen Verpacken von Produkten, das umfasst:
ein Formrohr (1);
ein Filmzuführmittel (2, 3), das so konfiguriert ist, dass es einen Film auf das Formrohr (1) aufträgt, so dass der Film zumindest einen Teil des Formrohrs umgibt, und so dass der Film entlang zumindest eines Teils der Formrohrs hin zu einem Austrittsende (11) des Formrohrs verschoben wird;
ein Längs-Filmversiegelungsmittel (4), das so konfiguriert ist, dass es den Film mithilfe einer Längsversiegelung (100) längsversiegelt und ein Filmrohr (102) bildet, das zumindest einen Teil des Formrohrs (1) umschließt;
ein erstes Quer-Filmversiegelungsmittel (5), das so konfiguriert ist, dass es eine Querversiegelung des Filmrohrs (102) in einer Position nach dem Austrittsende (11) des Formrohrs (1) bildet, wobei die Querversiegelungen eine obere Verschlussversiegelung (104) und eine untere Verschlussversiegelung (101) umfassen;
ein Schneidmittel, das so konfiguriert ist, dass es einen Querschnitt zwischen der oberen Verschlussversiegelung (104) und der unteren Verschlussversiegelung (101) durchführt, um einen Teil (10) des Filmrohrs (102) abzutrennen, nachdem die Querversiegelung gebildet wurde;
eine Vakuumkammer (7), die so konfiguriert ist, dass sie darin den Teil (10) des Filmrohrs (102) aufnimmt und die im Teil (10) enthaltende Luft extrahiert, bis ein Teilvakuum in einem vorab festgelegten Druck innerhalb des Teils (10) erzeugt ist;
**dadurch gekennzeichnet, dass**
das erste Quer-Filmversiegelungsmittel (5) so konfiguriert ist, dass es eine obere Verschlussversiegelung (104) mit einer Öffnung (103) bildet, und dass die Vakuumkammer (7) ein zweites Versiegelungsmittel (77) bildet, das so konfiguriert ist, dass es die Öffnung (103) versiegelt, nachdem die Luft aus dem Inneren des Teils (10) durch die Öffnung (103) in der Vakuumkammer (7) extrahiert wurde.

2. System nach Anspruch 1, wobei das erste Quer-Filmversiegelungsmittel (5) ein Ultraschallversiegelungsmittel mit gegenüberliegenden Versiegelungsflächen (51, 52) umfasst, die so konfiguriert sind, dass sie mit dem Filmrohr (102) in Kontakt gelangen und die Querversiegelung bilden, wobei die Versiegelungsflächen (51, 52) aus einem Amboss (51) und einer Sonotrode (52) bestehen, wobei die Sonotrode eine Oberseite und eine Unterseite umfasst, die durch eine Quernut getrennt sind, um die obere Verschlussversiegelung (104) bzw. die untere Verschlussversiegelung (101) zu bilden, wobei der Amboss (51) aus einem oberen Amboss (511), der so konfiguriert ist, dass er der Oberseite der Sonotrode zugewandt ist, und einem unteren Amboss (512) besteht, der so konfiguriert ist, dass er der Unterseite der Sonotrode zugewandt ist.

3. System nach Anspruch 2, wobei der untere Amboss (512) einen Hohlraum (513) umfasst, der so konfiguriert ist, dass die Versiegelungsflächen (51, 52) einander entlang des Hohlraums (513) nicht berühren, wenn sie die Querversiegelung bilden, wobei die Öffnung (103) in der oberen Verschlussversiegelung (104) gebildet wird.

4. System nach Anspruch 2, wobei das erste Quer-Filmversiegelungsmittel (5) ein Stanzmittel umfasst, das so konfiguriert ist, dass es die Öffnung (103) in der oberen Verschlussversiegelung (104) bildet.

5. System nach Anspruch 1, **dadurch gekennzeichnet, dass** das zweite Versiegelungsmittel (77) eine Spannbacke (772) umfasst, die so konfiguriert ist, dass sie eine Versiegelung (105) bildet, die die Öffnung (103) abgrenzt und die obere Verschlussversiegelung (104) überlappt, wobei der Teil (10) hermetisch versiegelt wird, nachdem die Luft in der Vakuumkammer (7) extrahiert wurde.

6. System nach Anspruch 5, **dadurch gekennzeichnet, dass** die Klemmbacke (772) eine ungefähr halbkreisförmige Konfiguration mit einem Durchmesser größer als die Länge der Öffnung (103) aufweist.

7. System nach Anspruch 1, **dadurch gekennzeichnet, dass** es darüber hinaus ein Verdichtungs- und Positioniermittel (6) umfasst, das zwei gegenüberliegende Platten (91, 92) umfasst, die innerhalb der Vakuumkammer (7) angeordnet sind, wobei die gegenüberliegenden Platten (91, 92) so konfiguriert sind, dass sie Druck auf ein in den Teil (10) des Filmrohrs (102) gegossenes Produkt (8) ausüben und dieses verdichten und den Teil (10) in die Vakuumkammer (7) einbringen und darin positionieren, so dass die Öffnung (103) der oberen Verschlussversiegelung (104) dem zweiten Versiegelungsmittel (77) gegenüberliegt.

8. System nach Anspruch 1, **dadurch gekennzeichnet, dass** es darüber hinaus ein Dehnmittel umfasst, das eine Klemme (61) und einen Dehner (62) umfasst, die so konfiguriert sind, dass sie synchron arbeiten und das Filmrohr (102) in Entsprechung mit den Versiegelungsflächen (51, 52) in im Wesentlichen horizontale entgegengesetzte Richtungen dehnen, so dass das Filmrohr (102) im Wesentlichen flach und knitterfrei in eine Richtung parallel zu den Oberflächen (51, 52) für die Querversiegelung ist.

9. System nach Anspruch 8, **dadurch gekennzeichnet, dass** die Klemme (61) zumindest einen Greifer (611) umfasst, der so konfiguriert ist, dass er den Film entlang der Längsversiegelung (100) ergreift, und dass der Dehner (62) eine Dehnstange (621) umfasst, die von unter dem Formrohr (1) vorsteht, dass der Dehner zumindest an einem seiner Enden eine Niederhalteplatte (622) umfasst, die so konfiguriert ist, dass sie die Innenfläche des Films in der Höhe der Klemme (61) berührt, und dass der Dehner (62) eine Zugstange (623) umfasst, die so konfiguriert ist, dass sie die Dehnstange (621) und die Niederhalteplatte (622) in der Richtung der Klemme (61) entgegengesetzt bewegt.

10. System nach einem der vorstehenden Ansprüche, **dadurch gekennzeichnet, dass** das Längs-Filmversiegelungsmittel (4) und das erste Quer-Filmversiegelungsmittel (5) so konfiguriert sind, dass die Längsversiegelung (100) an einem Ende der Querversiegelung (101, 104) ist, so dass in der Querversiegelung (101, 104) kein Bereich vorliegt, der mehr als zwei überlappende Filmschichten aufweist.

11. Verfahren zum vertikalen Verpacken von Produkten, das umfasst:
Auftragen eines Films auf ein Formrohr (1) und Bilden eines Filmrohrs (102) aus dem Film mithilfe einer Längsversiegelung (100);
sequentielles Zuführen eines Produkts (8) durch das Formrohr (1) und Bilden einer Querversiegelung, die eine untere Verschlussversiegelung (101) und eine obere Verschlussversiegelung (104) aufweist;
Durchführen eines Querschnitts zwischen der oberen Verschlusssiegelung (104) und der unteren Verschlusssiegelung (101), um einen Teil (10) des Filmrohrs (102) mit dem darin angeordneten Produkt (8) abzutrennen;
**dadurch gekennzeichnet, dass** es die weiteren Phasen umfasst:
Bilden einer Öffnung (103) in der oberen Verschlussversiegelung (104);
Extrahieren der im Teil (10) des Filmrohrs (102) enthaltenen Luft durch die Öffnung (103);
Bilden einer zweiten Versiegelung (105), um die Öffnung (103) zu versiegeln.

12. Verfahren nach Anspruch 11, **dadurch gekennzeichnet, dass** es darüber hinaus den Schritt des Dehnens des Filmrohrs (102) in Entsprechung mit den Versiegelungsflächen (51, 52) umfasst, bevor die Querversiegelung mit den Versiegelungsflächen (51, 52) gebildet wird.

13. Verfahren nach Anspruch 12, **dadurch gekennzeichnet, dass** der Schritt des Dehnens des Filmrohrs durch Dehnen des Filmrohrs mit zumindest einer Klemme (61) und einem Dehner (62) durchgeführt wird, die so konfiguriert sind, dass sie synchron in entgegengesetzte und im Wesentlichen horizontale Richtungen arbeiten, so dass das Filmrohr (102) im Wesentlichen flach und knitterfrei in eine Richtung parallel zu den Oberflächen (51, 52) für die Querversiegelung ist.

14. Verfahren nach Anspruch 12, **dadurch gekennzeichnet, dass** es darüber hinaus den Schritt des Verdichtens des Produkts mit einem Verdichtungs- und Positioniermittel (9), bevor die Querversiegelung mit den Versiegelungsflächen (51, 52) gebildet wird, und den Schritt des Einbringens des Teils (10) des Filmrohrs (102) in eine Vakuumkammer (7) und des Positionierens von diesem darin umfasst, nachdem die Querversiegelung gebildet wurde und der Schnitt, der den Teil (10) des Filmrohrs (102) abtrennt, durchgeführt wurde, so dass die Öffnung (103) einem zweiten Versiegelungsmittel (77) gegenüberliegt, das so konfiguriert ist, dass es die zweite Versiegelung (105) innerhalb der Vakuumkammer (7) bildet.

15. Verfahren nach Anspruch 14, **dadurch gekennzeichnet, dass** das zweite Versiegelungsmittel (77) eine zweite Versiegelung (105) mithilfe einer Spannbacke (772) bildet, die eine ungefähr halbkreisförmige Konfiguration mit einem Durchmesser größer als die Länge der Öffnung (103) umfasst, die die Öffnung (103) abgrenzt und die obere Verschlussnaht (104) überlappt, wobei der Abschnitt (10) des Filmrohrs (102) hermetisch versiegelt wird.

16. Verfahren nach einem der Ansprüche 11 bis 15, **dadurch gekennzeichnet, dass** die Längsversiegelung des Films und die Querversiegelung des Films derart gebildet werden, dass die Längsversiegelung an einem Ende der Querversiegelung ist, so dass in der Querversiegelung kein Bereich vorhanden ist, der mehr als zwei überlappende Filmschichten aufweist.

17. Verfahren nach einem der Ansprüche 11 bis 16, **dadurch gekennzeichnet, dass** die Filmzufuhr und die Bildung der Querversiegelung synchron mit der Zufuhr von Produkten (8) durch das Formrohr (1) durchgeführt werden, so dass jedes zu verpackende Produkt in einem Teil (10) des Filmrohrs (102) mit einer Basis aufgenommen wird, die durch die untere Verschlussversiegelung (101) definiert wird.

18. Verfahren nach Anspruch 17, **dadurch gekennzeichnet, dass** der Film nach Erhalt eines zu verpackenden Produkts (8) auf der unteren Verschlussversiegelung (101) vor der oberen Verschlussversiegelung (104) zugeführt wird.

## Revendications

1. Système d'emballage vertical de produits, qui comprend :
un tube de mise en forme (1) ;
un moyen d'alimentation en film (2, 3) configuré pour appliquer un film que ledit tube de mise en forme (1), de sorte que ledit film entoure au moins une partie dudit tube de mise en forme et que ledit film soit déplacé le long d'au moins une partie dudit tube de mise en forme, vers une extrémité d'évacuation (11) dudit tube de mise en forme ;
un moyen de scellage par film longitudinal (4) configuré pour sceller longitudinalement ledit film à l'aide d'un joint longitudinal (100), et pour former un tube de film (102) qui enveloppe au moins une partie dudit tube de mise en forme (1) ;
un premier moyen de scellage par film transversal (5) configuré pour former un joint transversal dudit tube de film (102) à un emplacement situé après ladite extrémité d'évacuation (11) dudit tube de mise en forme (1), lesdits joints transversaux comprenant un joint de fermeture supérieur (104) et un joint de fermeture inférieur (101) ;
un moyen de découpe configuré pour effectuer une découpe transversale entre ledit joint de fermeture supérieur (104) et ledit joint de fermeture inférieur (101) afin de séparer une partie (10) dudit tube de film (102) dès que ledit joint transversal a été formé ;
une chambre de vide (7) configurée pour contenir ladite partie (10) dudit tube de film (102) et pour extraire l'air contenu dans ladite partie (10) jusqu'à ce qu'un vide partiel soit produit à une pression prédéterminée à l'intérieur de ladite partie (10) ;
**caractérisé en ce que**
ledit premier moyen de scellage par film transversal (5) est configuré pour former un joint de fermeture supérieur (104) avec une ouverture (103), et **en ce que** ladite chambre de vide (7) comprend un second moyen de scellage (77) configuré pour fermer ladite ouverture (103) dès que l'air a été extrait de ladite partie (10) par le biais de ladite ouverture (103) dans ladite chambre de vide (7).

2. Système selon la revendication 1, dans lequel ledit premier moyen de scellage par film transversal (5) comprend un moyen de scellage par ultrasons qui possède des surfaces de scellage opposées (51, 52) configurées pour entrer en contact avec ledit tube de film (102) et pour former ledit joint transversal, lesdites surfaces de scellage (51, 52) étant composées d'une enclume (51) et d'une sonotrode (52), ladite sonotrode comprenant une face supérieure et une face inférieure séparées par une encoche transversale afin de former ledit joint de fermeture supérieur (104) et ledit joint de fermeture inférieur (101), respectivement, ladite enclume (51) étant composée d'une enclume supérieure (511) configurée pour être tournée vers ladite face supérieure de ladite sonotrode, et d'une enclume inférieure (512) configurée pour être tournée vers ladite face inférieure de ladite sonotrode.

3. Système selon la revendication 2, dans lequel ladite enclume inférieure (512) comprend un vide (513) configuré de sorte que lesdites surfaces de scellage (51, 52) ne se touchent pas le long dudit vide (513) lors de la formation dudit joint transversal, ladite ouverture (103) étant formée dans ledit joint de fermeture supérieur (104).

4. Système selon la revendication 2, dans lequel ledit premier moyen de scellage par film transversal (5) comprend un moyen de poinçonnage configuré pour former ladite ouverture (103) dans ledit joint de fermeture supérieur (104).

5. Système selon la revendication 1, **caractérisé en ce que** ledit second moyen de scellage (77) comprend une mâchoire (772) configurée pour former un joint (105) qui entoure ladite ouverture (103) et qui chevauche ledit joint de fermeture supérieur (104), en fermant hermétiquement ladite partie (10) dès que l'air a été extrait dans ladite chambre de vide (7).

6. Système selon la revendication 5, **caractérisé en ce que** ladite mâchoire (772) possède une configuration approximativement semi-circulaire, avec un diamètre supérieur à la longueur de ladite ouverture (103).

7. Système selon la revendication 1, **caractérisé en ce qu'**il comprend en outre un moyen de compactage et de positionnement (9) qui comprend deux plaques opposées (91, 92) placées à l'intérieur de ladite chambre de vide (7), lesdites plaques opposées (91, 92) étant configurées pour exercer une pression et compacter un produit (8) versé dans ladite partie (10) dudit tube de film (102), et pour introduire et positionner ladite partie (10) dans ladite chambre de vide (7), de sorte que ladite ouverture (103) dudit joint de fermeture supérieur (104) soit opposée audit second moyen de scellage (77).

8. Système selon la revendication 1, **caractérisé en ce qu'**il comprend en outre un moyen d'étirement qui comprend une pince (61) et un extenseur (62) qui sont configurés pour agir de manière synchrone et pour étirer ledit tube de film (102) en correspondance avec lesdites surfaces de scellage (51, 52) dans des directions opposées sensiblement horizontales, de sorte que ledit tube de film (102) soit sensiblement plat et sans pli dans une direction parallèle auxdites surfaces (51, 52) pour ledit joint transversal.

9. Système selon la revendication 8, **caractérisé en ce que** ladite pince (61) comprend au moins une préhension (611) configurée pour saisir ledit film le long dudit joint longitudinal (100), **en ce que** ledit extenseur (62) comprend une tige d'étirement (621) qui sort du dessous dudit tube de mise en forme (1), **en ce que** ledit extenseur comprend, à l'une de ses extrémités, une plaque de maintien (622) configurée pour toucher la surface intérieure dudit film à hauteur de ladite pince (61), et **en ce que** ledit extenseur (62) comprend une tige de traction (623) configurée pour déplacer ladite tige d'étirement (621) et ladite plaque de maintien (622) dans la direction opposée à ladite pince (61).

10. Système selon l'une quelconque des revendications précédentes, **caractérisé en ce que** ledit moyen de scellage par film longitudinal (4) et ledit premier moyen de scellage par film transversal (5) sont configurés de sorte que ledit joint longitudinal (100) se trouve à une extrémité dudit joint transversal (101, 104), de sorte qu'il n'existe aucune zone dans ledit joint transversal (101, 102) qui possède plus de deux couches de film qui se chevauchent.

11. Procédé d'emballage vertical de produits, qui comprend :
l'application d'un film sur un tube de mise en forme (1) et la formation d'un tube de film (102) à partir dudit film à l'aide d'un joint longitudinal (100) ;
l'approvisionnement séquentiel en produit (8) par le biais dudit tube de mise en forme (1) et la formation d'un joint transversal qui comprend un joint de fermeture inférieur (101) et un joint de fermeture supérieur (104) ;
la réalisation d'une découpe transversale entre ledit joint de fermeture supérieur (104) et ledit joint de fermeture inférieur (101) afin de séparer une partie (10) dudit tube de film (102) avec ledit produit (8) à l'intérieur ;
**caractérisé en ce qu'**il comprend les étapes supplémentaires qui consistent à :
former une ouverture (103) dans ledit joint de fermeture supérieur (104) ;
extraire l'air contenu dans ladite partie (10) dudit tube de film (102) par le biais de ladite ouverture (103) ;
former un second joint (105) afin de sceller ladite ouverture (103).

12. Procédé selon la revendication 11, **caractérisé en ce qu'**il comprend en outre l'étape qui consiste à étirer ledit tube de film (102) en correspondance avec lesdites surfaces de scellage (51, 52) avant de former ledit joint transversal avec lesdites surfaces de scellage (51, 52).

13. Procédé selon la revendication 12, **caractérisé en ce que** ladite étape d'étirement dudit tube de film est exécutée en étirant ledit tube de film avec au moins une pince (61) et un extenseur (62) qui sont configurés pour agir de manière synchrone dans des directions opposées et sensiblement horizontales de sorte que ledit tube de film (102) soit sensiblement plat et sans pli dans une direction parallèle auxdites surfaces (51, 52) pour ledit joint transversal.

14. Procédé selon la revendication 12, **caractérisé en ce qu'**il comprend en outre l'étape qui consiste à compacter ledit produit avec un moyen de compactage et de positionnement (9) avant de former ledit joint transversal avec lesdites surfaces de scellage (51, 52), et l'étape qui consiste à introduire et à positionner ladite partie (10) dudit tube de film (102) à l'intérieur d'une chambre de vide (7) dès que ledit joint transversal a été formé et que ladite découpe qui sépare ladite partie (10) dudit tube de film (102) a été créée, de sorte que ladite ouverture (103) soit opposée audit second moyen de scellage (77) configuré pour former ledit second joint (105) à l'intérieur de ladite chambre de vide (7).

15. Procédé selon la revendication 14, **caractérisé en ce que** ledit second moyen de scellage (77) forme un second joint (105) à l'aide d'une mâchoire (772) qui possède une configuration approximativement semi-circulaire avec un diamètre supérieur à la longueur de ladite ouverture (103), qui entoure ladite ouverture (103) et qui chevauche ledit joint de fermeture supérieur (104), en fermant hermétiquement ladite partie (10) dudit tube de film (102).

16. Procédé selon les revendications 11 à 15, **caractérisé en ce que** ledit joint longitudinal dudit film et ledit joint transversal dudit film sont formés de sorte que ledit joint longitudinal se trouve à une extrémité dudit joint transversal afin qu'il n'existe aucune zone au sein dudit joint transversal qui possède plus de deux couches de film qui se chevauchent.

17. Procédé selon l'une quelconque des revendications 11 à 16, **caractérisé en ce que** ledit approvisionnement en film et ladite formation de joint transversal sont effectués de manière synchrone en fournissant lesdits produits (8) par le biais dudit tube de mise en forme (1) de sorte que chaque produit à emballer soit contenu dans une partie (10) dudit tube de film (102) avec une base définie par ledit joint de fermeture inférieur (101).

18. Procédé selon la revendication 17, **caractérisé en ce que** ledit film est fourni après qu'un produit (8) à emballer ait été reçu sur ledit joint de fermeture inférieur (101), avant ledit joint de fermeture supérieur (104).
